# EUROPÄISCHE PATENTANMELDUNG

(11) **EP 1 724 392 A2**
(43) Veröffentlichungstag der Anmeldung: **22.11.2006**
(21) Anmeldenummer: 06009157.6
(22) Anmeldetag: 03.05.2006
(51) Int. Cl.: D06M 16/00, D06M 11/00, D06M 11/13, D06M 11/83, D06M 15/00, D06M 15/15, D06M 15/564

(54) **Verfahren zur antimikrobiellen Ausrüstung von textilen Flächengebilden**

(30) Priorität: 04.05.2005 DE 102005020889
(71) Anmelder: FRITZ BLANKE GMBH & CO. KG, 32108 Bad Salzuflen (DE)
(72) Erfinder: Ritter, Wolfgang, 67591 Offstein (DE)
(74) Vertreter: Reitstötter - Kinzebach

(57) **Zusammenfassung**

Die Erfindung betrifft ein Verfahren zur antimikrobiellen Ausrüstung von textilen Flächengebilden, insbesondere von Geweben, dass die folgenden Schritte umfasst:
a) Behandeln eines textilen Flächengebildes mit einer ersten verdünnten wässrigen Flotte enthaltend wenigstens ein in Wasser lösliches polymeres Dispergiermittel und/oder ein polymeres Verdickungsmittel und wenigstens einen partikelförmigen Silberbestandteil, der ausgewählt ist unter
i. in Wasser schwerlöslichen Silbersalzen,
ii. einem Silbersol und
iii. einem pulverförmigen Silbermaterial, und

b) Behandeln des textilen Flächengebildes mit einer zweiten wässrigen Flotte b) enthaltend eine wässrige Zusammensetzung eines Bindemittels.

## Beschreibung

Die vorliegende Erfindung betrifft ein Verfahren zur antimikrobiellen Ausrüstung von textilen Flächengebilden, insbesondere von Geweben, durch Behandeln mit verdünnten wässrigen Flotten, die partikelförmige Silberbestandteile enthalten.

Die antibakteriellen Eigenschaften von Silber und Silber(I)-Salzen sind seit Langem bekannt und finden auch heute noch medizinische Verwendung, beispielsweise bei der Crede-Prophylaxe (siehe z. B A.B.G. Landsdown, Journal of Woundcare, 11 (2002), S. 125 bis 130 und dort zitierte Literatur).

Verschiedentlich wurde über die Verwendung von Silber und Silberverbindungen zur antimikrobiellen Ausrüstung von Geweben berichtet. So beschreiben beispielsweise die US 2,689,809 und die US 2,791,518 ein Verfahren zur antimikrobiellen Ausrüstung von Geweben, bei dem zunächst das Gewebe mit einer wässrigen Lösung eines Silbersalzes imprägniert und anschließend eine Fällung des Silbersalzes in der Textilie durchgeführt wird. Von Nachteil ist, dass das Aufbringen der Silberverbindungen zweistufig erfolgt. Zudem ist die Beständigkeit der antimikrobiellen Ausrüstung, insbesondere gegenüber Wäsche, nicht zufriedenstellend.

Zur Verbesserung der Eigenschaften und der Beständigkeit antimikrobieller Ausrüstungen auf Basis von Silber schlägt die WO 00/49219 vor, das Gewebe zunächst mit solubilisiertem Chitosan zu imprägnieren, anschließend das Gewebe mit einer Lösung eines Silbersalzes zu imprägnieren, dann das Gewebe mit einem Reduktionsmittel zu behandeln und anschließend das Chitosan zu vernetzen. Dieses Verfahren ist auf Grund der Vielzahl von Schritten vergleichweise aufwendig.

Die WO 01/49115 beschreibt ein Verfahren zur antimikrobiellen Ausrüstung von Geweben, bei dem man das Gewebe zunächst mit einer wässrigen Lösung eines Silbersalzes imprägniert und anschließend das Gewebe zur Fällung von Silber(I, III)-oxid mit einem Oxidationsmittel in Gegenwart einer Base, beispielsweise mit einem Persulfat in Gegenwart von Alkalimetallhydroxid, behandelt. Die Verwendung von Oxidationsmittel kann jedoch zu einer Schädigung des Gewebes führen.

Die US 6,821,936 wiederum beschreibt ein Verfahren zur antimikrobiellen Ausrüstung von Gewebe und Garnen, bei dem man Silberionen-enthaltende Substanzen wie lonenaustauscher-Harze, Zeolithe oder Silberionen-freisetzende Gläser auf einem Gewebe bzw. Garn niederschlägt und mit einem Bindemittel fixiert. Zum einen sind die eingesetzten Silbersubstanzen vergleichsweise teuer. Von Nachteil erweist sich auch der steife Griff der auf diese Weise erhaltenen Gewebe. Zudem sind vergleichsweise hohe Temperaturen zur Abscheidung der Silbersubstanz auf dem Gewebe erforderlich. Ein ähnlicher Sachverhalt ist aus der US 6,584,668 bekannt.

Der vorliegenden Erfindung liegt die Aufgabe zu Grunde, ein einfaches Verfahren zur antimikrobiellen Ausrüstung von textilen Flächengebilden zur Verfügung zu stellen. Die antimikrobielle Ausrüstung sollte sich durch eine gute Waschpermanenz auszeichnen. Zudem sollten die taktilen Eigenschaften der Textilie nicht oder nur geringfügig negativ beeinflusst werden. Diese und weitere Aufgaben werden durch das im Folgenden erläuterte Verfahren gelöst.

Die Erfindung betrifft daher ein Verfahren zur antimikrobiellen Ausrüstung von textilen Flächengebilden, insbesondere von Geweben, dass die folgenden Schritte umfasst:
a) Behandeln eines textilen Flächengebildes mit einer ersten verdünnten wässrigen Flotte enthaltend wenigstens ein in Wasser lösliches polymeres Dispergiermittel und/oder ein polymeres Verdickungsmittel und wenigstens einen partikelförmigen Silberbestandteil, der ausgewählt ist unter
   i. in Wasser schwerlöslichen Silbersalzen,
   ii. einem Silbersol und
   iii. einem pulverförmigen Silbermaterial, und
b) Behandeln des textilen Flächengebildes mit einer zweiten wässrigen Flotte b) enthaltend eine wässrige Bindemittelzusammensetzung.

Das erfindungsgemäße Verfahren lässt sich in einfacher Weise durchführen und liefert textile Flächengebilde mit hoher antimikrobieller Wirkung, z. B. gegen Staphylokocken wie Staphylococcus aureus, gegen Pseudomonas wie Pseudomonas aeuginosa, gegen Klebsiellen wie Klebsiella pneumoniae, aber auch gegen Hefepilze wie Candida albicans. Zudem zeichnet sich die erfindungsgemäß erhältliche antimikrobielle Ausrüstung durch eine gute Waschpermanenz aus. Die durch das erfindungsgemäße Verfahren erhältlichen textilen Flächengebilde sind daher ebenfalls Gegenstand der vorliegenden Anmeldung.

Erfindungsgemäß wird in einem ersten Schritt die auszurüstenden textilen Flächengebilde mit einer ersten verdünnten, wässrigen Flotte, die wenigstens einen partikelförmigen Silberbestandteil und wenigstens ein in Wasser lösliches polymeres Dispergiermittel und/oder ein polymeres Verdickungsmittel enthält, behandelt.

Als wasserlösliche Dispergiermittel kommen grundsätzlich alle in Wasser löslichen Polymere in Betracht, die üblicherweise in wässrigen Systemen zur Stabilisierung partikulärer Substanzen eingesetzt werden. Hierzu zählen Polymere, die aus ethylenisch ungesättigten Mono- und/oder Dicarbonsäuren aufgebaut sind, z. B. Polyacrylsäuren, Copolymeren der Acrylsäure mit Methacrylsäure und/oder Maleinsäure, insbesondere deren Natriumsalze oder Ammoniumsalze, Homo- und Copolymere von Amid-Gruppen-tragenden monoethylenisch ungesättigten Monomeren wie Acrylamid, Methacrylamid oder N-Vinylpyrrolidon, z.B. Polyacrylamid und Polyvinylpyrollidon, weiterhin Polyvinylalkohol, Polyether wie Polyethylenoxid und Polyethylenoxid-Polypropylenoxid-Copolymere, Polystyrol-block-Polyethylenoxid, und AB-Kammpolymere, z. B. Polymethacryl-comb-polyethylenoxid und native wasserlösliche Polymere, deren Abbauprodukte und modifizierte native Polymere, z. B. Polysaccharide Stärke, Stärkeabbauprodukte, Stärkederivate, Cellulosen und modifizierte Cellulose wie Carboxymethylcellulose, Hydroxyethyl- u. Hydroxyopylcellulose, Xanthane und Alginate, wasserlösliche Proteine wie Caseine und Gelatine einschließlich Typ A-Gelatine und Typ B-Gelatine. Besonders bevorzugt sind wasserlösliche Proteine, insbesondere Gelatine. Gleichermaßen bevorzugt sind Homo- und Copolymere Amidgruppen-tragender monoethylenisch ungesättigter Monomere, insbesondere Polyvinylpyrrolidone und Vinylpyrrolidonenthaltende Copolymere. Die Konzentration an wasserlöslichem Polymer in der Flotte liegt typischerweise im Bereich von 0,5 bis 50 g/l und insbesondere im Bereich von 1 bis 10 g/l.

Als polymere Verdicker kommen neben den vorgenannten Dispergiermitteln wie Gummi arabicum, Gelatine, Caseine, Stärke, Alginate, Polyether, Cellulose-Derivate wie Methyl-, Carboxymethylcellulose, Hydroxyethyl- u. Hydroxyropylcellulose, Polyacrylsäure-Salze, wie das Natriumsalz oder das Ammoniumsalz der Polyacrylsäure, auch hydrophob modifizierte Polyurethane (Assoziativverdicker) und wässrige Copolymerdispersionen von ethylenisch ungesättigten Mono- und Dicarbonsäuren wie Acrylsäure, Methacrylsäure oder Maleinsäure, mit hydrophoben Comonomeren, z. B. C₁-C₁₀-Alkylacrylaten oder -methacrylaten, C₂-C₁₄₋Olefinen oder Styrol in Betracht, wobei der Anteil der einpolymerisierten monoethylenisch ungesättigten Carbonsäuren in den Polymerdispersionen typischerweise wenigstens 5 Gew.-%, bezogen auf die das Copolymer konstituierenden Monomere beträgt und typischerweise im Bereich von 5 bis 50 Gew.-% liegt. Die Konzentration an polymerem Verdicker in der Flotte liegt typischerweise im Bereich von 0,5 bis 50 g/l und insbesondere im Bereich von 1 bis 20 g/l.

Die Gesamtkonzentration an polymerem Dispergiermittel und Verdicker liegt typischerweise im Bereich von 0,5 bis 50 g/l und insbesondere im Bereich von 1 bis 20 g/l.

Die Konzentration an Silber bzw. silberhaltigem Bestandteil in der wässrigen Flotte liegt typischerweise im Bereich von 10 bis 1000 mg/l, vorzugsweise im Bereich von 20 bis 800 mg/l und speziell im Bereich von 50 bis 500 mg/l, jeweils als Silber gerechnet. Bei Silberpartikeln mit Teilchengrößen im Mikrometerbereich können die wässrigen Flotten auch höhere Konzentrationen an Silber, z.B. bis 5000 mg/l aufweisen.

In einer ersten Ausführungsform i. handelt es sich bei dem Silberbestandteil um ein in Wasser schwer lösliches Silbersalz wie Silberphosphat oder insbesondere um eine Silberhalogenid wie Silberchlorid, Silberbromid, Silberiodid oder eine Mischung davon, speziell eine Mischung von Silberchlorid mit Silberbromid. Hierbei hat es sich besonders bewährt, ein schwerlösliches Silbersalz einzusetzen, das aus einer wässrigen Lösung eines wasserlöslichen Silbersalzes wie Silbernitrat, die wenigstens ein in Wasser lösliches, polymeres Dispergiermittel enthält, gefällt wurde. Die Fällung erfolgt durch Zugabe eines Fällungsmittels, wodurch das wasserlösliche Silbersalz in ein in Wasser unlösliches Silbersalz überführt wird. Dementsprechend sind geeignete Fällungsmittel neben Alkali- und Erdalkalimetallhydroxiden, Alkalimetallphosphate, -hydrogenphosphate und Ammoniumhydrogenphosphate, Alkalimetall-, Erdalkalimetall- und Ammoniumhalogenide, wobei die Halogenide, insbesondere die Chloride und Bromide besonders bevorzugt sind. Vorteilhafterweise erfolgt die Fällung durch Zugabe einer wässrigen Silbersalzlösung, z. B. einer Silbernitratlösung zu einer wässrigen Lösung des Fällungsmittels, welche das wasserlösliche polymere Dispergiermittel enthält. Typischerweise erfolgt die Fällung bei Temperaturen im Bereich von 10 bis 100°C und insbesondere im Bereich von 20 bis 80°C. Die Konzentration an Dispergiermittel liegt typischerweise im Bereich von 1 bis 100 g/l. Vorteilhafterweise werden die Konzentrationsverhältnisse bei der Fällung so gewählt, dass man zunächst eine Dispersion des in Wasser unlöslichen Silbersalzes mit einem Gehalt im Bereich von 0,1 bis 10 Gew.-%, gerechnet als Silber, erhält und diese Suspension/Dispersion anschließend auf die gewünschte Flottenkonzentration verdünnt. Die auf diese Weise hergestellten Flotten enthalten sehr kleine partikelförmige Silbersalzbestandteile mit Teilchengrößen von in der Regel unterhalb 500 nm, insbesondere im Bereich von 1 bis 300 nm.

In einer zweiten Ausführungsform ii. enthält die erste verdünnte wässrige Flotte den partikelförmigen Silberbestandteil in Form eines Silbersols, d. h. in Form von elementarem Silber mit sehr geringen Teilchengrößen, die typischerweise unterhalb 500 nm und insbesondere im Bereich von 1 bis 300 nm oder darunter liegen. Die Herstellung des Silbersols erfolgt in an sich bekannter Weise durch Zugabe wenigstens eines Reduktionsmittel zu einer wässrigen Lösung eines Silbersalzes, z. B. zu einer wässrigen Silbernitrat-Lösung. Als Reduktionsmittel kommen bekannte organische Reduktionsmittel wie beispielsweise Formaldehyd, Ascorbinsäure, Zuckeraldehyde usw. aber auch anorganische Reduktionsmittel wie unedle Metalle z.B. Zink aber auch Verbindungen wie schweflige Säure, phosphorige Säure und deren Salze wie z. B. Natriumboranat in Betracht. Die Menge an Reduktionsmittel liegt typischerweise im Bereich von 0,5 bis 10 mol pro mol Silbersalz. Die Herstellung des Sols erfolgt typischerweise bei Temperaturen im Bereich von 5 bis 80°C und kann gegebenenfalls durch Sonnenlicht oder durch UV-Strahlung gefördert werden. Vorteilhafterweise erfolgt die Herstellung des Sols in Gegenwart des in Wasser löslichen, polymeren Dispergiermittels in der oben angegebenen Menge. Das so erhaltene Silbersol kann anschließend auf die gewünschte Flottenkonzentration verdünnt werden.

In einer dritten Ausführungsform der Erfindung enthält die erste wässrige Flotte als partikelförmigen Silberbestandteil einen pulverförmigen Silberbestandteil. Hierunter versteht man Silber oder silberhaltige Materialien mit Partikelgrößen von typischerweise unterhalb 100 µm, z. B. im Bereich von 0,5 bis 100 µm, insbesondere im Bereich von 1 bis 50 µm und speziell im Bereich von 2 bis 20 µm (die hier angegebenen Partikelgrößen beziehen sich auf das Massenmittel bzw. den d₅₀-Wert). Insbesondere weist der pulverförmige Silberbestandteil eine Korngrößenverteilung auf, bei dem der d₁₀-Wert im Bereich von 0,5 bis 20 µm, speziell 1 bis 10 µm, der d₅₀-wWert im Bereich von 1 bis 50 µm, speziell 2 bis 20 µm und der d₉₀-Wert im Bereich von 5 bis 100 µm, speziell 10 bis 50 µm liegt. Beispiele für pulverförmige Silberbestandteile sind Silberschuppen, Silbernadeln oder vorteilhafterweise mit Silber beschichtete Keramik- oder Glaspulver. Der Gewichtsanteil an Silber in dem beschichteten Keramik- oder Glaspulver beträgt in der Regel wenigstens 3 Gew.-% und vorzugsweise wenigstens 5 Gew.-% und wird in der Regel einen Wert von 70 Gew.-% und insbesondere 50 Gew.-%, jeweils bezogen auf das Gesamtgewicht des Pulvers, nicht überschreiten. Insbesondere liegt er im Bereich von 10 bis 40 Gew.-% und besonders bevorzugt im Bereich von 15 bis 35 Gew.-%. Derartige Pulver sind bekannt und im Handel erhältlich, z.B. unter der Handelsbezeichnung Conduct-O-Fil® Silver Coated Hollow Glass Spheres (Glashohlkugel, Borosilikatglas, 20 bis 33 ± 2 % Silber), z. B. die Typen SH230S33, SH400S33; Conduct-O-Fil® Silver Coated Glass Spheres (Glasvollkugel, 4 bis 20± 2 % Silber), z. B. die Typen S-2429-S, S-3000-S, S-3000-S2E, S-3000-S2M, S-3000-S3E, S-3000-S3M, S-3000-S3N, S-3000-S4M, S-4000-S3, S-5000-S2, S-5000-S3 und Conduct-O-Fil® Silver Coated Hollow Ceramic Additive (Keramikhohlkugel, 16 bis 30 ± 2 % Silber), z. B. die Typen AG-SL 150-16-TRD und AG-SL 150-30-TRD, von der Firma Potters Industries Inc. Valley Forge, PA USA bzw. von der Firma Potters-Ballotini, Kirchheim-Bolanden/Deutschland, sowie die Sil Shield Typen der Firma Nanotechnologie bv Hollandiastraat 5 6006 TT Weert, Niederlande, z.B. Sil Shield Ag/hs 10/33.

Zur Stabilisierung der Silberpartikel enthalten derartige Flotten typischerweise wenigstens eines der obengenannten Dispergier- und/oder Verdickungsmittel. Bevorzugte Verdickungsmittel sind als Verdicker genannten wässrigen Copolymerdispersionen von ethylenisch ungesättigten Mono- und Dicarbonsäuren mit hydrophoben Comonomeren sowie weiterhin sogenannte Assoziativverdicker auf Polyurethan-Basis. Die Menge an Verdickerpolymer wird typischerweise so gewählt, dass die Viskosität der Flotte im Bereich von 1 bis 5000 mPa.s und insbesondere im Bereich von 10 bis 1000 mPa.s (bei 25°C) beträgt. Die Konzentration an polymerem Verdicker liegt typischerweise im Bereich von 0,5 bis 50 g/l und insbesondere im Bereich von 1 bis 20 g/l.

Gemäß einer vierten Ausführungsform der Erfindung enthält die erste wässrige Flotte als partikelförmigen Silberbestandteil einen pulverförmigen Silberbestandteil wie zuvor für die 3. Ausführungsform beschrieben, und einen feinteiligen Silberbestandteil mit einer mittleren Teilchengröße unterhalb 500 nm, insbesondere im Bereich von 1 bis 300 nm, z.B. ein schwerlösliches Silbersalz und/oder ein Silbersol, wie zuvor für die erste und die zweite Ausführungsform beschrieben. Das Gewichtsverhältnis von pulverförmigem Silberbestandteil zu feinteiligem Silberbestandteil liegt dann vorzugsweise im Bereich von 1000:1 bis 1:100 und insbesondere im Bereich von 100:1 bis 1:10.

Das Behandeln der textilen Flächengebilde mit der ersten verdünnten wässrigen Flotte erfolgt in an sich üblicher Weise durch Tränken des Gewebes mit der verdünnten wässrigen Flotte, beispielsweise mittels eines Foulards oder in einer Waschmaschine oder durch Besprühen. Vorteilhafterweise wird die Behandlung so durchgeführt, dass die Flottenaufnahme wenigstens 50 %, insbesondere wenigstens 70 %, z. B. 70 bis 95 % beträgt. Dementsprechend weist das so behandelte textile Flächengebilde im Anschluss an die Behandlung einen Silbergehalt von typischerweise 10 bis 1000 µg/g, vorteilhafterweise 20 bis 800 µg/g und insbesondere 50 bis 500 µg/g Silber auf . Grundsätzlich können jedoch auch größere Mengen an Silber, z.B. bis 10000 µg/g, insbesondere bis 5000 µg/g aufgebracht werden, insbesondere im Falle der dritten und der vierten Ausführungsform.

Vor dem Behandeln mit der zweiten wässrigen Flotte b) kann man das in Schritt a) behandelte textile Flächengebilde trocknen. Häufig wird man jedoch auf einen Trocknungsschritt verzichten. Auch ist es möglich, das Behandeln des textilen Flächengebildes in Schritt a) mit dem Behandeln des textilen Flächengebildes in Schritt b) zu einem Schritt zusammenzufassen, d. h. die erste verdünnte wässrige Flotte a) enthält neben dem wenigstens einen partikelförmigen Silberbestandteil zusätzlich bereits das Bindemittel.

Erfindungsgemäß werden die textilen Flächengebilde außerdem mit einer zweiten wässrigen Flotte b) behandelt, die eine wässrige Zusammensetzung eines gegebenenfalls vernetzbaren polymeren Bindemittels enthält. Bei den Bindemitteln handelt es sich vorzugsweise um wasserunlösliche Polymere oder Präpolymere, die beim Trocknen des behandelten Flächengebildes einen wasserunlöslichen polymeren Film ausbilden. Insbesondere handelt es sich bei dem Bindemittel um Polymere oder Präpolymere, die eine Vielzahl reaktiver Gruppen aufweisen, welche beim Trocknen des behandelten Flächengebildes, gegebenenfalls bei Anwendung erhöhter Temperatur, unter Bindungsbildung miteinander oder mit einem niedermolekularen Vernetzer reagieren und so einen besonders festen, wasserunlöslichen polymeren Film ausbilden.

Wässrige, für das erfindungsgemäßen Verfahren geeignete Zusammensetzungen polymerer Bindemittel sind insbesondere solche, die als Appreturen für Textilien verwendet werden (siehe z. B. J. Hemmrich, Int. Text. Bull. 39, 1993, Nr.2, S. 53-56; "Wässrige Polyurethan-Beschichtungssysteme" Chemiefasern/Textilind. 39 91 (1989) T149, T150; W. Schröer, Textilveredelung 22, 1987, S. 459.-467). Wässrige Dispersionen dieses Typs sind im Handel erhältlich, z. B. unter den Handelsbezeichnungen Alberdingk® der Fa. Alberdingk, D-Krefeld, Impranil® der Fa. BAYER AG, Permutex® der Fa. Stahl, Waalwijk, Niederlande, Quecodur und Rhenapret der Fa. Thor GmbH Landwehrstr.1 D-67346 Speyer, Meikanate der Fa.Mitsubishi International GmbH Kennedydamm 19 in D 40476 Düsseldorf oder können nach bekannten Verfahren hergestellt werden, wie sie beispielsweise in "Herstellverfahren für Polyurethane" in Houben-Weyl, "Methoden der organischen Chemie", Band E 20/Makromolekulare Stoffe, S. 1587, D. Dietrich et al., Angew. Chem. 82 (1970), S. 53 ff., Angew. Makrom. Chem. 76, 1972, 85 ff. und Angew. Makrom. Chem. 98, 1981, 133-165, Progress in Organic Coatings, 9, 1981, S. 281-240, bzw. Römpp Chemielexikon, 9. Auflage, Band 5, S. 3575 beschrieben werden.

Es ist bevorzugt, wenn die Bindemittelpolymere eine Glasübergangstemperatur T_{G} im Bereich von -40 bis 100 °C, vorzugsweise -30 bis +60 °C, insbesondere -20 bis +40 °C, aufweisen. Sofern das polymere Bindemittel mehrere Polymerkomponenten umfasst, sollte zumindest der Hauptbestandteil eine Glasübergangstemperatur in diesem Bereich aufweisen. Insbesondere liegt die Glasübergangstemperatur des Hauptbestandteils im Bereich von -20 °C bis +60 °C und besonders bevorzugt im Bereich von -10°C bis +40 °C. Bei zu niedriger Glasübergangstemperatur besteht die Gefahr, dass die Oberfläche klebrig ist. Die angegebenen Glasübergangstemperaturen beziehen sich dabei auf die gemäß ASTM-D 3418-82 mittels DSC bestimmte "midpoint temperature". Im Falle vernetzbare Bindemittel bezieht sich die Glasübergangstemperatur auf den unvernetzten Zustand.

Die polymeren Bindemittel basieren üblicherweise auf den folgenden Polymerklassen:
(1) Polyurethan-Harze
(2) Acrylatharze (Reinacrylate: Copolymere aus Alkylacrylaten und Alkylmethacrylaten);
(3) Styrolacrylate (Copolymere aus Styrol und Alkylacrylaten);
(4) Styrol/Butadien-Copolymerisate;
(5) Polyvinylester, insbesondere Polyvinylacetate und Copolymere des Vinylacetats mit Vinylpropionat;
(6) Vinylester-Olefin-Copolymere, z. B. Vinylacetat/Ethylen-Copolymere;
(7) Vinylester-Acrylat-Copolymere, z. B. Vinylacetat/Alkylacrylat-Copolymere sowie Vinylacetat/Alkylacrylat/Ethylen-Terpolymere;
(8) Silikonkautschuke (Polysiloxane)
wobei Bindemittel der Polymerklasse (1), d.h. Polyurethane besonders bevorzugt sind.

Die Bindemittel sind vorzugsweise vernetzend bzw. vernetzbar, d. h. die Polymere weisen funktionelle Gruppen (vernetzbare Gruppen) auf, die beim Trocknen, gegebenenfalls beim Erwärmen, miteinander oder mit einem niedermolekularen Vernetzer unter Bindungsbildung reagieren.

Beispiele für vernetzbare funktionelle Gruppen umfassen aliphatisch gebundene OH-Gruppen, NH-CH₂-OH-Gruppen, Carboxylat-Gruppen, Anhydrid-Gruppen, Isocyanat-Gruppen, verkappte Isocyanatgruppen und Aminogruppen. In der Regel beträgt der Anteil der reaktiven funktionellen Gruppen 0,1 bis 3 mol/kg Polymer. Die Vernetzung kann innerhalb des Polymers durch Reaktion komplementär-reaktiver funktioneller Gruppen bewirkt werden. Vorzugsweise bewirkt man die Vernetzung des Polymers durch Zugabe eines Vernetzers, der reaktive Gruppen aufweist, welche hinsichtlich ihrer Reaktivität zu den funktionellen Gruppen des Vernetzers komplementär sind. Geeignete Paare funktioneller Gruppen, die eine komplementäre Reaktivität aufweisen sind dem Fachmann bekannt. Beispiele für solche Paare sind OH/COOH, OH/NCO, NH₂/COOH, NH₂/NCO sowie M²⁺/COOH, wobei M²⁺ für ein zweiwertiges Metallion wie Zn²⁺, Ca²⁺, oder Mg²⁺ steht. Vorzugsweise weist das Bindemittelpolymer verkappte Isocyanat-Gruppen als reaktive Gruppen auf.

Beispiele für geeignete niedermolekulare Vernetzer sind die nachstehend bei den Polyurethanen genannten Di- oder Polyole; primäre oder sekundäre Diamine, vorzugsweise primäre Diamine, z. B. Alkylendiamine wie Hexamethylendiamin, Diethylentriamin, Triethylentetramin, Tetraethylenpentamin, N,N-Bis[(aminopropyl)amino]-ethan, 3,6-Dioxaoctandiamin, 3,7-Dioxanonandiamin, 3,6,9-Trioxaundecandiamin oder Jeffamine, (4,4'-Diaminodicyclohexyl)methan, (4,4'-Diamino-3,3-dimethyldicyclohexyl)methan; Aminoalkohole wie Ethanolamin, Hydroxypropylamin; ethoxilierte Di- und Oligoamine; Dihydrazide von aliphatischen oder aromatischen Dicarbonsäuren wie Adipinsäuredihydrazid; Dialdehyde wie Glyoxal; teilweise oder vollständig O-methylierte Melamine, sowie Verbindungen oder Oligomere, die im Mittel zwei oder mehr, vorzugsweise drei oder mehr Isocyanatgruppen oder reversibel blockierte Isocyanatgruppen aufweisen. In diesem Fall wird das Mengenverhältnis von Vernetzer zu polymerem Bindemittel so bemessen, dass das Molverhältnis der reaktiven Gruppen im polymeren Bindemittel (Gesamtmenge der reaktiven Gruppen in den Polymeren) zu den reaktiven Gruppen im Vernetzer in der Regel im Bereich von 1:10 bis 10:1 und vorzugsweise im Bereich von 3:1 bis 1:3 liegt. Üblicherweise liegt das Gewichtsverhältnis von polymeren Bindemittel (gerechnet als Feststoff) zu Vernetzer im Bereich von 100:1 bis 1:1 und insbesondere im Bereich von 50:1 bis 5:1.

Erfindungsgemäß werden Bindemittel bevorzugt, die wenigstens 50 Gew.-% Polyurethane, bezogen auf das Gesamtgewicht an Bindemittelpolymeren in der Zusammensetzung, umfassen. Der Polyurethan-Anteil bewirkt einen weichen Griff, eine hohe Waschpermanenz.

Bei den Polyurethanen handelt es sich bekanntermaßen um Additionsprodukte aus wenigstens einer Polyisocyanat-Komponente und wenigstens einer Polyol-Komponente. Die Polyisocyanat-Komponente umfasst in der Regel wenigstens ein Diisocyanat. Darüber hinaus kann die Isocyanat-Komponente auch höherfunktionelle Isocyanate, z. B. Triisocyante oder oligomere Isocyanate, die im Mittel mehr als zwei und vorzugsweise drei oder mehr Isocyanatgruppen aufweisen, umfassen. Die Polyolkomponente umfasst in der Regel wenigstens ein Diol. Die Polyolkomponente kann auch höherfunktionelle Polyole oder oligomere Polyole mit im Mittel mehr als zwei OH-Gruppen, vorzugsweise drei, vier und mehr OH-Gruppen umfassen.

Geeignete Diisocyanate sind aromatische Diisocyanate wie 2,4- und 2,6-Toluylendiisocyanat (TDI) und Isomerengemische davon, Tetramethylxylendüsocyanat (TMXDI), Xylendüsocyanat (XDI), Diphenylmethan-4,4'-diisocyanat (MDI), sowie aliphatische und cycloaliphatische Diisocyanate, wie Dicylohexylmethan-4,4'-diisocyanat (H₁₂MDI), Tetramethylendiisocyanat, Hexamethylendüsocyanat (HMDI), Isophorondüsocyanat (IPDI), Trimethylhexamethylendiisocyanat sowie Gemische davon. Zu den bevorzugten Diisocyanaten zählen Hexamethylendiisocyanat (HMDI) und Isophorondüsocyanat. Beispiele für höherfunktionelle Isocyanate sind Triisocyanate wie Triphenylmethan-4,4',4"-triisocyanat, die partielle Kondensationsprodukte der obengenannten Diisocyanate wie die Cyanurate und Biurethe der vorgenannten Diisocyanate sowie Oligomere, die durch gezielte Reaktion von Diisocyanaten oder von semiblockierten Diisocyanaten mit Polyolen, welche im Mittel mehr als zwei und vorzugsweise wenigstens drei OH-Gruppen je Molekül aufweisen, erhältlich sind.

Bevorzugte Polyisocyanate sind aliphatischer oder cycloaliphatischer Natur. Insbesondere sind Diisocyanate der allgemeinen Formel

OCN-(CH₂)ₙ-NCO

mit n = 2 bis 8, insbesondere 4 bis 6 bevorzugt. Der Anteil der Polyisocyanat-Komponente an den Bestandteilen, welche das Polyurethan bilden liegt in der Regel im Bereich von 5 bis 60 Gew.-%, insbesondere im Bereich von 10 bis 40 Gew.-%.

Als Polyolkomponente kommen grundsätzlich niedermolekulare Alkohole mit zwei oder mehr, z. B. drei oder vier OH-Gruppen sowie oligomere Polyole in Betracht, die im Mittel wenigstens zwei, vorzugsweise zwei bis vier und insbesondere zwei oder drei OH-Gruppen aufweisen, welche insbesondere an ihren Termini angeordnet sind.

Geeignete niedermolekulare Alkohole sind insbesondere Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1,10-Decandiol, Diethylenglykol, Triethylenglykol, Dipropylenglykol, Tripropylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C).

Weitere mögliche Bestandteile der Polyol-Komponente sind dreiwertige (Triole) und höherwertige, niedermolekulare Alkohole. Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Beispiele für oligomere Polyole sind Polyesterpolyole, Polycarbonatpolyole und Polyetherpolyole. Das zahlenmittlere Molekulargewicht dieser Komponente liegt vorzugsweise im Bereich von 500 bis 20000 Dalton, vorzugsweise 1000 bis 10000 Dalton. Bevorzugt ist die oligomere Komponente aus aliphatischen Bausteinen aufgebaut.

Der Anteil oligomerer Polyole an den das Polyurethan bildenden Komponenten liegt in der Regel im Bereich von 10 bis 95 Gew.-%, vorzugsweise 20 bis 95 Gew.-% und insbesondere 25 bis 85 Gew.-% bezogen auf das Gesamtgewicht der das Polyurethan-bildenden Komponenten. Der Anteil an niedermolekularen Alkoholen beträgt in der Regel nicht mehr als 60 Gew.-% , z. B. 1 bis 60 Gew.-%, und häufig bis 30 Gew.-% oder bis 20 Gew.-%.

Da die Polyurethane erfindungsgemäß in Form einer wässrigen Dispersion eingesetzt werden, weisen sie in der Regel polare funktionelle Gruppen auf, insbesondere ionogene und/oder ionischen Gruppen z. B. anionische bzw. anionogene Gruppen wie Carbonsäuregruppen, Sulfonsäuregruppen, Phosphonsäuregruppen, Phosphorsäuregruppen, die auch in ihrer Salz-Form z. B. als Alkalimetall- und Ammoniumsalze vorliegen können; kationische bzw. kationogene Gruppen wie Aminogruppen, quaternäre Aminogruppen; und/oder neutrale wasserlösliche Gruppen wie Polyethergruppen, vorzugsweise Polyethylenoxid-Gruppen.

Bevorzugte Polyurethane sind solche, die aliphatische Polyetherketten (vorzugsweise linear oder einfach verzweigt), insbesondere Poly-C₂-C₄-alkylenoxid-Ketten aufweisen. Diese sind naturgemäß dadurch erhältlich, dass man bei der Herstellung der Polyurethane aliphatische Polyetherpolyole einsetzt. Der Anteil an Polyetherketten in Polyetherurethanen beträgt vorzugsweise 5 bis 80 Gew.-% und insbesondere 10 bis 50 Gew.-% der Gesamtmasse des Polyurethans. Bevorzugte Polyurethane sind weiterhin aliphatische Polyesterurethane, d. h. Polyurethane, die aliphatische Polyesterketten (vorzugsweise linear oder einfach verzweigt) aufweisen und die dadurch erhältlich sind, dass man die obengenannten aliphatischen Polyesterpolyole bei der Herstellung der Polyurethane einsetzt. Der Anteil an Polyesterketten beträgt vorzugsweise 5 bis 80 Gew.-% und insbesondere 10 bis 70 Gew.-% der Gesamtmasse des Polyurethans. Bevorzugte Polyurethane sind weiterhin aliphatische Polycarbonaturethane, d. h. Polyurethane, die aliphatische Polcarbonatketten (vorzugsweise linear oder einfach verzweigt) aufweisen und die dadurch erhältlich sind, dass man die oben genannten aliphatischen Polycarbonatpolyole bei der Herstellung der Polyurethane einsetzt. Der Anteil an Polycarbonatketten beträgt vorzugsweise 5 bis 80 Gew.-% und insbesondere 10 bis 70 Gew.-% der Gesamtmasse des Polyurethans.

Besonders bevorzugt werden in Schritt b) wässrige Zusammensetzugen eingesetzt, die als Bindemittel reaktiv verkappte Polyisocyanate enthalten. Hierunter versteht man Polymere und Präpolymere mit lsocyanat-Gruppen, die reversibel blockiert sind. Eine reversible Blockierung erreicht man z.B. durch Umsetzung Isocyanat-Gruppen enthaltender Polymere bzw. Präpolymere mit CH-aciden Verbindungen, vorzugsweise mit Oximen aliphatischer Ketone wie Butanonoxim oder durch Umsetzung mit Natriumsufit oder Natriumhydrogensulfit.

In einer anderen Ausführungsform handelt es sich bei der Bindemittelzusammensetzung um eine wässrige Zusammensetzung niedermolekularer Verbindungen, die wenigstens 2 N-Methylolgruppen (Hydroxymethylgruppen) im Molekül aufweisen oder um deren Umsetzungsprodukte mit C₁-C₆-Alkanolen wie Methanol, Ethanol, n-Propanol, Diethylenglykol und dergleichen. Beispiele für Verbindungen mit wenigstens 2 N-Methylolgruppen sind Harnstoffderivate wie N,N-Bis(hydroxymethyl)imidazolin-2-on, N,N-Bis(hydroxymethyl)-4,5-dihydroxyimidazolin-2-on, N,N-Bis(hydroxymethyl)imidazolin-2-on, N,N-Bis(hydroxymethyl)-propylenharnstoff, Tetra(hydroxymethyl)acetylendiharnstoff sowie niedermolekulare Melamin-Formaldehyd Harze, z.B. Tris(hydroxymethyl)melamin. Derartige Produkte sind unter den Handelsbezeichnungen Fixapret® der BASF Aktiengesellschaft und Quecodur® der Fa. Thor GmbH, Landwehrstr. 1, D-67346 Speyer im Handel erhältlich.

Die im erfindungsgemäßen Verfahren eingesetzte zweite Flotte enthält das Bindemittel typischerweise in einer Menge von 10 bis 400 g/l, insbesondere in einer Menge von 10 bis 200 g/l und speziell in einer Menge von 10 bis 50 g/l.

Neben den Bindemittelbestandteilen kann die zweite wässrige Flotte übliche Hilfsmittel enthalten, wie sie bei konventionellen Appreturmitteln für Textilien und Leder eingesetzt werden. Art und Menge dieser Hilfsmittel richtet sich an sich bekannter Weise nach der Textilie und dem Imprägnierverfahren. Zu den Hilfsmitteln zählen UV-Stabilisatoren, Dispergierhilfsmittel, oberflächenaktive Substanzen, Verdicker, Entschäumer oder schaumbildende Mittel, Schaumstabilisatoren, Mittel zur Einstellung des pH-Wertes, Antioxidantien, Katalysatoren für die Nachvernetzung, übliche Hydrophobiermittel sowie Konservierungsmittel, wobei diese Hilfsmittel-Klassen nicht in allen Fällen streng voneinander zu Trennen sind, z. B. im Falle von oberflächenaktiven Substanzen und Schaumbildnern bzw. Schaumstabilisatoren. In der Regel wird die Gesamtmenge der üblichen Hilfsmittel einen Wert von 20 Gew.-%, bezogen auf das Gesamtgewicht des in der Flotte enthaltenen Bindemittels, bzw. 20 g/l, bezogen auf die zweite Flotte, nicht überschreiten.

Mittel zur Einstellung des pH-Wertes sind die üblicherweise verwendeten anorganischen oder organischen Basen, beispielsweise Ammoniak, Alkalimetallbasen wie Kalium- und Natriumhydroxid, Natriumhydrogencarbonat, Natriumcarbonat, Kaliumcarbonat, Kaliumhydrogencarbonat, Erdalkalimetallbasen wie Calciumhydroxid, Calciumoxid, Magnesiumhydroxid oder Magnesiumcarbonat, Alkylamine, wie Ethylamin, Diethylamin, Trimethylamin, Triethylamin, Triisopropylamin und Mono-, Di- und Trialkanolamine wie Ethanolamin, Diethanolamin, Aminomethylpropanol, Aminomethylpropandiol und Trishydroxymethylaminomethan sowie Gemische davon.

Geeignete oberflächenaktive Substanzen sind die üblicherweise zur Herstellung wässriger Polymerdispersionen verwendeten Emulgatoren, Polymertenside und Schutzkolloide. Die Emulgatoren können amphoter, neutraler, anionischer oder kationischer Natur sein. Geeignete Emulgatoren sind dem Fachmann aus dem Stand der Technik bekannt, z. B. aus R. Heusch, "Emulsiones" in Ullmanns Encyclopedia of Industrial Chemistry, 5^{th} ed. on CD-Rom, Kapitel 7. Beispiele für nicht-ionische Emulgatoren sind alkoxylierte Fette und Öle, z. B. Maisölethoxylate, Rizinusölethoxylate, Talgfettethoxylate; Glycerinester, z. B. Glycerinmonostearat; Fettalkoholalkoxylate und Oxoalkoholalkoxylate; Alkylphenolalkoxylate, z. B. Isononylphenolethoxylate; und Zuckertenside, z. B. Sorbitanfettsäureester (Sorbitanmonooleat, Sorbitantristearat), Polyoxyethylensorbitanfettsäureester. Insbesondere verwendet man Fettalkoholethoxylate. Beispiele für geeignete anionische Emulgatoren sind Seifen, Alkansulfonate, Olefinsulfonate, Alkylarylsulfonate, Alkyinaphthalinsulfonate, Sulfosuccinate, Alkylsulfate und Alkylethersulfate, Alkylmethylestersulfonate sowie Gemische davon, vorzugsweise in Form der Natriumsalze. Beispiele für Polymertenside sind die im Zusammenhang mit der ersten Flotte erwähnten Dispergiermittel. Der Anteil an oberflächenaktiven Substanzen, bezogen auf das Gesamtgewicht der Polymerbestandteile der Beschichtung, liegt in der Regel im Bereich von 0 bis 20 Gew.-%, vorzugsweise 0,1 bis 10 Gew.-%, bezogen auf das Gesamtgewicht des Bindemittels in der Flotte.

Geeignete Entschäumer sind beispielsweise höhere Alkohole, nichtionogene Acetylenverbindungen, aliphatische Kohlenwasserstoffe mit nichtionogenen Bestandteilen sowie Oligosiloxane.

Beispiele für Schaumbildner sind die Salze, insbesondere die Alkalimetall- und Ammoniumsalze von Alkylsulfaten und von Sulfobernsteinsäuredialkylestern. Beispiele für Schaumstabilisatoren sind insbesondere Fettsäuresalze.

Geeignete Verdicker sind die im Zusammenhang mit der ersten Flotte erwähnten polymeren Verdicker sowie anorganische Verdickungsmittel wie Kieselsäure, sowie Gemische davon. Die Menge an Verdickungsmittel hängt naturgemäß von der gewünschten Rheologie der zweiten Flotte ab und kann daher über einen weiten Bereich schwanken.

Erfindungsgemäß werden handelt es sich bei der ersten als auch bei der zweiten Flotte um wässrige Systeme, d.h. neben den vorgenannten Bestandteilen enthalten sie Wasser oder eine Mischung aus Wasser mit organischen Lösungsmitteln, welche in Wasser löslich, bzw. mit Wasser mischbar sind, wobei der Wasseranteil in der ersten und der zweiten Flotte typischerweise wenigstens 95 Vol.-%, insbesondere wenigstens 99 Vol.-%, bezogen auf die Gesamtmenge an Wasser + organischem Lösungsmittel beträgt. Geeignete Lösungsmittel umfassen Ketone wie Aceton und Methylethylketon, mit Wasser mischbare Ether wie Tetrahydrofuran, Dioxan, 1,2-Priopandiol-1-n-propylether, 1,2-Butandiol-1-methylether, Ethylenglykolmonomethylether, Diethylenglykolmonomethylether, Diethylenglykoldimethylether, Mono- oder Polyalkohole wie Methanol, Ethanol, n-Propanol, Isopropanol, Glykol, Glycerin, Propylenglykol oder Polyethylenglykol, sowie Gemische davon.

Das Behandeln des textilen Flächengebildes mit der zweiten Flotte kann in an sich üblich Weise erfolgen, wobei man zunächst das textile Flächengebilde mit der zweiten Flotte in Kontakt bringt und anschließend eine Trocknung und/oder Härtung, vorzugsweise bei erhöhter Temperatur, durchführt. Hierbei kommt es zur Ausbildung eines polymeren, wasserunlöslichen Films der Bindemittelpolymere, gegebenenfalls unter Vernetzung, und zu einer Fixierung des Silbermaterials im Gewebe.

Das In-Kontakt-Bringen mit der zweiten Flotte kann nach den bei der Behandlung mit der ersten Flotte beschriebenen Methoden erfolgen. In der Regel wird man mit der zweiten Flotte behandeln, bis eine Flottenaufnahme von wenigstens 50 %, insbesondere im Bereich von 60 bis 95 % erreicht ist. Das In-Kontakt-Bringen erfolgt typischerweise mit einem Foulard. Die auf diese Weise aufgebrachte Menge an Bindemittel bewegt sich typischerweise im Bereich von 1 bis 20 g/m², insbesondere im Bereich von 1 bis 10 g/m².

Anschließend wird man das wässrige Medium der zweiten Flotte entfernen, d. h. das feuchte textile Flächengebilde trocknen. Das Trocknen erfolgt in der Regel unter Normaldruck bei Temperaturen oberhalb 50 °C, vorzugsweise im Bereich von etwa 70 bis 150 °C. Der Trockenvorgang nimmt in der Regel wenige Sekunden bis mehrere Minuten z. B. 20 Sekunden bis 5 Minuten in Anspruch, aber auch längere Trocknungszeiten sind möglich. Bevorzugt ist eine progressive Trocknung, d. h. die Trocknungstemperatur wird im Verlauf der Trocknung gesteigert, z. B. von einem Anfangswert von 50 bis 80 °C auf einen Endwert von 120 bis150 °C. Auf diese Weise werden besonders gute Qualitäten erhalten. Anschließend wird in der Regel eine Vernetzung des Bindemittels, d.h. eine Härtung durchführen, die auch als Kondensationsschritt bzw. Kondensieren bezeichnet wird. Sie erfolgt naturgemäß oberhalb der Vernetzungstemperatur des polymeren Bindemittels. Zur Vernetzung wird man in der Regel Temperaturen oberhalb 140 °C und insbesondere oberhalb 150 °C anwenden, häufig im Bereich von 150 °C bis 200 °C und speziell im Bereich von 150 bis 180 °C. Die Kondensationsdauer liegt üblicherweise im Bereich von 1 min. bis 5 min. Trocknung und Kondensation können gleichzeitig oder vorzugsweise nacheinander ausgeführt werden.

Bei den erfindungsgemäß auszurüstenden textilen Flächengebilden kann es sich um Gewebe, Gestricke, Gewirke und um Vliese handeln. Insbesondere handelt es sich um Gewebe oder Vliese. Es kann es sich um Fertigware aber auch um Rollen- oder Ballenware handeln. Die textilen Flächengebilde können aus Naturfasergarnen, Synthesefasergarnen und/oder Mischgarnen aufgebaut sein, wobei die Gewebe üblicherweise ein Flächengewicht im Bereich von 10 bis 500 g/m² vorzugsweise 20 bis 250 g/m² aufweisen. Als Fasermaterialien kommen grundsätzlich alle für die Herstellung von Textilien üblicherweise eingesetzten Fasermaterialien in Betracht. Hierzu zählen Baumwolle, Wolle, Hanffaser, Sisalfasern, Flachs, Ramie, Polyacrylnitrilfasern, Polyesterfasern, Polyamidfasern, Viskosefasern, Seide, Acetatfasern, Triacetatfasern, Aramidfasern und dergleichen sowie Mischungen dieser Fasermaterialien. Geeignet sind auch Glasfasern sowie Mischungen der vorgenannten Fasermaterialien mit Glasfasern z. B. Glasfaser/Kevlar-Mischungen.

Durch das erfindungsgemäße Verfahren erhält man textile Flächengebilde mit einer mikrobioziden Ausrüstung, die sich durch eine hohe Dauerhaftigkeit, insbesondere durch hohe Waschpermanenz auszeichnet. Die taktilen Eigenschaften der erfindungsgemäß hergestellten Textilien werden nicht oder nur geringfügig beeinflusst.

### Imprägnierbeispiele:

### Beispiele 1 bis 22 (mit Silberhalogenid ausgerüstes Gewebe) und Beispiele 1a bis 22a (Gewebe erhalten nach Reduktion mit Ascorbinsäure)

a) Herstellung einer Silberhalogenid-Suspension
   In 400 ml Wasser löste man nacheinander 5 g Natriumchlorid, 1,6 g Ammoniumbromid und 1,4 g Zitronensäure. Zu 400 g dieser Lösung gab man 50 g Gelatine (Gelatine reinst Artikel Nr. 4582.1 der Fa. Carl Roth GmbH u. Co Schoemperlenstr. 1-5 in D- 76185 Karlsruhe) und löste unter Erwärmen auf 50°C. Zu dieser Lösung gab man bei 50°C unter Rühren langsam eine frisch hergestellte Lösung von 10 g Silbernitrat (Silbernitrat der Fa. Mallinckrodt Baker B.V. P.O. Box 1 7400 AA Deventer Holland) in 15 g Wasser. Auf diese Weise erhielt man eine wässrige Silberhalogenid-Suspension mit einem Silbergehalt von 2,1 Gew.-%, gerechnet als Silbernitrat (entspicht 1,33 Gew.-% Silber).
b) Herstellung einer Silberhalogenid-Flotte
   Flotte F1: 100 g der Silberhalogenid-Suspension aus a) wurden bei 23°C mit 3450 g Wasser vermischt. Man erhielt auf diese Weise eine wässrige Flotte mit einem Silbergehalt von 0,0591 Gew.-%, gerechnet als Silbernitrat.
   Flotte F2: 10 g der Silberhalogenid-Suspension aus a) wurden bei 23°C mit 1779 g Wasser vermischt. Man erhielt auf diese Weise eine wässrige Flotte mit einem Silbergehalt von 0,0118 Gew.-%, gerechnet als Silbernitrat.
c) Imprägnierung einer Textilie, allgemeine Vorschrift:
   Ein Baumwollgewebe mit einem Flächengewicht von 142 g/m² (Art. 7121005 der Textilvertrieb-Beratung GmbH, Winterlingen) wurde bei Raumtemperatur mit einer der in b) hergestellten Flotte foulardiert. Die Flottenaufnahme betrug 85 %.
   Anschließend wurde das Gewebe mit einer wässrigen Dispersion eines vernetzenden Bindemittels bis zu einer Flottenaufnahme von 85 % foulardiert. Anschließend wurde das Gewebe 5 min. bei 120°C getrocknet und 2 min. bei 160°C kondensiert.
   Die Einsatzmengen sind in Tabelle A angegeben.
   Die mit Flotte F1 behandelten Gewebe wiesen einen Silbergehalt von 500 ppm und die mit Flotte F2 behandelten Gewebe einen Silbergehalt von 100 ppm auf.
   Es wurden die folgenden Bindemittel verwendet:
   A konzentrierte wässrige Lösung von N,N-Dimethylol-4,5-dihydroxyimidazolin-2-on (Quecodur® SLF der Fa. Thor GmbH, Landwehrstr. 1, D-67346 Speyer)
   B wässrige Dispersion eines selbstvernetzenden Acrylpolymerisat (Rhenapret® CFA der Fa.Thor GmbH Landwehrstr. 1, D-67346 Speyer)
   C wässrige, aliphatische Polyurethan Dispersion (Rhenapret® TL 897 der Fa. Thor GmbH, Landwehrstr. 1, D-67346 Speyer)
   D wässrige Dispersion eines verkappten reaktiven Polyurethans (Meikanate® TP 10 der Fa. Mitsubishi International GmbH, Kennedydamm 19, D-40476 Düsseldorf)
   E wässrige, selbstvernetzende Polyurethandispersion (Impranil® DLP 10 der Fa. Bayer AG, Leverkusen)
d) Reduktion des Silberhalogenids
   Das in c) erhaltene Gewebe wurde mindestens 3 h in einer wässrigen Lösung von Ascorbinsäure (5 g/l) unter UV-Licht gelagert.

### Bestimmung der Waschpermanenz:

An getrockneten Proben der in c) bzw. d) erhaltenen Gewebe wurde eine Grauwertbestimmung durchgeführt. Die Grauwertbestimmung erfolgte mit einem Datacolor SF 600 Plus CT. Die Ergebnisse sind in Tabelle A angegeben (Lichtart ADN Deg 10).

Jeweils eine Gewebeprobe mit der Größe Din A4 der in d) erhaltenen Gewebe wurden in einer konventionellen Waschmaschine bei 60°C mit einem konventionellen Waschmittel (Persil) bei einer Konzentration von 3 g/l gewaschen und nach dem Trocknen erneut der Grauwert bestimmt. Die Ergebnisse sind in Tabelle A angegeben.

**Tabelle A**

| Beispiel | Ag-Flotte | Bindemittel | | Grauwerte | | |
|---|---|---|---|---|---|---|
| | | | (g/l) | vor Reduktion | nach Reduktion | Nach Wäsche |
| Kontrolle | F1 | -- | -- | -0,20 | -14,52 | -1,72 |
| 1 | F1 | A | 30 | -1,26 | -14,75 | -1,90 |
| 2 | F1 | A | 60 | -0,94 | -15,37 | -2,50 |
| 3 | F1 | A | 120 | -0,61 | -13,34 | -4,27 |
| 4 | F1 | B | 30 | -1,14 | -18,24 | -8,4 |
| 5 | F1 | B | 120 | -1,70 | -20,13 | -11,6 |
| 6 | F1 | C | 100 | -1,81 | -17,99 | -10,4 |
| 7 | F1 | C | 300 | -1,98 | -20,02 | -12,8 |
| 8 | F1 | D | 30 | -2,34 | -16,05 | -8,28 |
| 9 | F1 | D | 100 | -3,07 | -16,67 | -7,91 |
| 10 | F1 | E | 30 | -1,15 | -17,91 | -7,03 |
| 11 | F1 | E | 100 | -1,79 | -18,01 | -4,97 |
| Kontrolle | F2 | -- | -- | -0,32 | -6,84 | -0,34 |
| 12 | F2 | A | 30 | -0,59 | -3,57 | -1,57 |
| 13 | F2 | A | 60 | -1,08 | -4,79 | -2,18 |
| 14 | F2 | A | 120 | -0,73 | -4,82 | -2,55 |
| 15 | F2 | B | 30 | -0,90 | -5,32 | -3,77 |
| 16 | F2 | B | 120 | -1,75 | -7,85 | -3,25 |
| 17 | F2 | C | 100 | -1,82 | -6,47 | -3,98 |
| 18 | F2 | C | 300 | -2,32 | -9,11 | -5,87 |
| 19 | F2 | D | 30 | -1,08 | -7,24 | -5,26 |
| 20 | F2 | D | 100 | -1,47 | -7,80 | -6,29 |
| 21 | F2 | E | 30 | -1,74 | -8,37 | -5,04 |
| 22 | F2 | E | 100 | -1,73 | -9,28 | -5,95 |

Die Werte belegen, daß insbesondere bei Einsatz der polymeren Bindemitteltypen C, D und E auch nach der Wäsche Silberhalogenid bzw. Silber auf dem Gewebe zurückbleibt.

Beispiele 23 bis 32 (mit kolloidalem Silber ausgerüstes Gewebe)
a) Herstellung der Flotte mit Gelatine als wasserlöslichem Dispergiermittel:
   Die in Tabelle B angegebene Menge an Silber wurde in 900 ml einer wässrigen Gelatinelösung (Gelatine reinst Artikel Nr. 4582.1 der Fa. Carl Roth GmbH) mit einer Gelatinekonzentration von 5,5 g/l gelöst und bei Raumtemperatur langsam mit einer Lösung von 1 g Ascorbinsäure in 99 ml Wasser versetzt. Auf dieser Weise erhielt man ein Silbersol, das wenigstens 20 h stabil war.
b) Herstellung der Flotte mit Polyvinylpyrrolidon als wasserlöslichem Dispergiermittel:
   Die in Tabelle B angegebene Menge an Silber wurde in 900 ml einer wässrigen Lösung von Polyvinylpyrrolidon mit einer Konzentration von 5,5 g/l gelöst und bei Raumtemperatur langsam mit einer Lösung von 1 g Ascorbinsäure in 99 ml Wasser versetzt. Auf dieser Weise erhielt man ein Silbersol, das wenigstens 20 h stabil war.
c) Imprägnierung einer Textilie, allgemeine Vorschrift:
   Ein Baumwollgewebe mit einem Flächengewicht von 142 g/m² (Art. 7121005 der Textilvertrieb-Beratung GmbH, Winterlingen) wurde bei Raumtemperatur mit einer der in a) bzw. b) hergestellten Flotten foulardiert. Die Flottenaufnahme betrug 85 %.
   Anschließend wurde das Gewebe mit einer wässrigen Dispersion eines vernetzenden Bindemittels (Impranil DLP der Bayer AG Leverkusen) bis zu einer Flottenaufnahme von 85 % foulardiert. Anschließend wurde das Gewebe 5 min. bei 120°C getrocknet und 2 min. bei 160°C kondensiert.

An getrockneten Proben der in c) erhaltenen Gewebe wurde eine Grauwertbestimmung durchgeführt. Die Grauwertbestimmung erfolgte mit einem Datacolor SF 600 Plus CT. Die Ergebnisse sind in Tabelle B angegeben (Lichtart ADN Deg 10).

**Tabelle B:**

| Beispiel | AgNO₃ [mg] | Dispergiermittel | Grauwert |
|---|---|---|---|
| 23 | 500 | Gelatine | -11,76 |
| 24 | 250 | Gelatine | -9,13 |
| 25 | 125 | Gelatine | -6,32 |
| 26 | 62,5 | Gelatine | -2,78 |
| 27 | 31,0 | Gelatine | -3,24 |
| 28 | 500 | PVP | |
| 29 | 250 | PVP | |
| 30 | 125 | PVP | |
| 31 | 62,5 | PVP | |
| 32 | 31,0 | PVP | |

### Beispiele 33 bis 38 (mit Silberkugeln ausgerüstetes Gewebe)

Als Silberbestandteil dienten mit Silber beschichtete Glashohlkugeln mit folgender Körnung: 8,1 Mikrometer (D₁₀), 14,8 Mikrometer (D₅₀), 25,8 Mikrometer (D₉₀), einer speziefischen Oberfläche von 4325 qm/kg und einem Silberanteil von 33,2 Gew. % (Sil Shield Ag/hs 10/33 der Firma Nanotechnology bv, Hollandiastraat 5, 6006TT Weert).

Als Bindemittel wurde eine wässrige Polyurethandispersion (Impranil® DLP 10 der Fa. Bayer AG Leverkusen) eingesetzt.

Als Verdicker wurde eine wässrige Dispersion eines Copolymeren auf Basis von Methacrylsäure und Ethylacrylat mit einem Feststoffgehalt von ca 30 Gew.-% und einer Viskosität von 5 bis 30 mPa.s bei 20°C und pH 5 eingesetzt (Rohagit® SD15 der Polymer Latex GmbH & Co. KG).
a) Allgemeine Vorschrift zur Herstellung der Flotte
Zu 960 g einer verdünnten Dispersion des Bindemittels mit einer Bindemittelkonzentration von X g/l gab man 20 g der wässrigen Dispersion des Verdickers und rührte 5 min. Danach gab man unter Rühren 20 ml wässrigen Ammoniak (2,5 gew.-%ig) zu und rührte weitere 5 min. und bestimmte dann den pH-Wert. Der pH-Wert lag in allen Fällen im Bereich von 9,1 bis 9,8. Dann gab man unter Rühren Y mg der mit Silber beschichteten Glashohlkugeln zu und bestimmte die Viskosität der Flotte nach Brookfield. Die Einsatzmengen und die Viskosität sowie die Viskosität einer auf das Doppelte verdünnten Probe sowie die Absetzstabilität sind in Tabelle C angegeben.
b) Imprägnierung einer Textilie, allgemeine Vorschrift:
Ein Baumwollgewebe der Größe 6 x Din A4 mit einem Flächengewicht von 137 g/m² (der Textil-Beratungs GmBH, Winterlingen) wurde bei Raumtemperatur mit einer der in a) hergestellten Flotten foulardiert. Die Flottenaufnahme betrug 85 %. Anschließend wurde das Gewebe 5 min. bei 120°C getrocknet und 2 min. bei 160°C kondensiert. Die Beispiele 33 bis 38 sind in der Tabelle C zusammengefasst.

**Tabelle C:**

| Beispiel | 33 | 34 | 35 | 36 | 37 | 38 |
|---|---|---|---|---|---|---|
| Silber [mg] | 120 | 600 | 6000 | 120 | 600 | 6000 |
| Bindemittel [g/l] | 30 | 30 | 30 | 100 | 100 | 100 |
| pH-Wert der Flotte | 9,65 | 9,39 | 9,67 | 9,12 | 9,42 | 9,13 |
| Viskosität (mPa.s) | 175 | 141 | 131 | 138 | 125 | 133 |
| Stabilität (d) | > 7 | > 7 | 2 | 7 | 7 | 3 |

Zum Nachweise der Fixierung und der Waschpermanenz wurde als Referenz analog Beipiel 35 aber ohne Silberkugeln ein Baumwollgewebe ausgerüstet. Die so ausgerüstete Referenzprobe und die Gewebeproben nach Beispiel 35 und 38 wurden bei 120 °C bis zur Gewichtskonstanz getrocknet, und jeweils ein 100g Muster bei 850 °C verascht und der Rückstand bestimmt.

Jeweils ein Gewebemuster wurde einmal bei 60° C mit Persil gewaschen und in der zuvor beschriebenen Weise getrocknet und verascht.

| Probe | Rückstand nach Veraschen vor Wäsche | /Gew. % nach Wäsche |
|---|---|---|
| Referenz | 0,25 | 0,32 |
| 35 | 0,709 | 0,81 |
| 38 | 0,699 | 0,78 |

Die Daten zeigen, dass die versilberten Glaskugeln auch nach der Wäsche noch großteils auf dem Gewebe vorhanden sind. Elektronenmikroskopische Aufnahmen zeigen ebenfalls das Vorhandensein von Silberkugeln auf dem Gewebe an.

Nachweis der bioziden Wirkung.

Die biozide Wirkung wurde gemäß Suspensionstest bzw. Challenge Test nach der Prüfmethode der Hohensteiner Institute , Schloß Hohenstein, D-74357 Bönnigheim durchgeführt. ( Siehe Vortrag Dr. Helmut Mucha bei der 5. Dresdner Textiltagung 2000).

In der Tabelle sind die Abtötungsraten nach 2 (und 6 Stunden) Einwirkzeit beschrieben.

| Gewebemuster | E-Coli | Micrococus luteus |
|---|---|---|
| 10 | 60 (99,9) | 60 (99,9) |
| 23 | 60 (99,9) | 50 (99,9) |
| 34 | 50 (80) | 60 (80) |
| 35 | 80 (99,9) | 90 (99,9) |

## Patentansprüche

1. Verfahren zur antimikrobiellen Ausrüstung von textilen Flächengebilden umfassend die folgenden Schritte:
a) Behandeln eines textilen Flächengebildes mit einer ersten verdünnten wässrigen Flotte enthaltend wenigstens ein in Wasser lösliches polymeres Dispergiermittel und/oder ein polymeres Verdickungsmittel und wenigstens einen partikelförmigen Silberbestandteil, der ausgewählt ist unter
i. in Wasser schwerlöslichen Silbersalzen,
ii. einem Silbersol und
iii. einem pulverförmigen Silbermaterial, und
b) Behandeln des Textilen Flächengebildes mit einer zweiten wässrigen Flotte b), enthaltend eine wässrige Zusammensetzung eines Bindemittels.

2. Verfahren nach Anspruch 1, wobei das in Wasser lösliche polymere Dispergiermittel Gelatine ist.

3. Verfahren nach Anspruch 1 oder 2, wobei die erste Flotte als Silberbestandteil eine wässrige Dispersion eines in Wasser schwerlöslichen Silbersalzes enthält, die durch Zugabe eines Fällungsmittels zu einer wässrigen Lösung eines löslichen Silbersalzes, die das in Wasser lösliche polymere Dispergiermittel enthält, erhalten wurde.

4. Verfahren nach einem der Ansprüche 1 bis 3, wobei das schwerlösliche Silbersalz ein Silberhalogenid oder ein Gemisch von Silberhalogeniden ist.

5. Verfahren nach Anspruch 3 oder 4, wobei das Verfahren zusätzlich die Reduktion des Silbersalzes umfasst.

6. Verfahren nach Anspruch 1 oder 2, wobei die erste Flotte als Silberbestandteil ein Silbersol enthält, das durch Zugabe eines Reduktionsmittels zu einer wässrigen Lösung eines löslichen Silbersalzes, die das in Wasser lösliche polymere Dispergiermittel enthält, erhalten wurde.

7. Verfahren nach Anspruch 2 oder 3, wobei die erste Flotte als Silberbestandteil ein dispergiertes mit Silber beschichtetes Glaspulver mit einer mittleren Teilchengröße im Bereich von 0,5 bis 50 µm enthält.

8. Verfahren nach Anspruch 7, wobei die erste Flotte zusätzlich einen in Wasser schwerlöslichen Silberbestandteil enthält, der eine mittlere Teilchengröße unterhalb 500 nm aufweist.

9. Verfahren nach einem der vorhergehenden Ansprüche, wobei die Konzentration an Silberbestandteilen in ersten Flotte im Bereich von 0,01 bis 1 g/l, gerechnet als Silber, liegt.

10. Verfahren nach einem der vorhergehenden Ansprüche, wobei das in Schritt b) eingesetzte Bindemittel Isocyanatgruppen oder reversibel blockierte Isocyanatgruppen aufweist.

11. Verfahren nach Anspruch 10, wobei das Bindemittel ein reaktives Polyurethan ist.

12. Verfahren nach einem der Ansprüche, wobei das in Schritt b) eingesetzte Bindemittel wenigstens eine vernetzbare Verbindung mit wenigstens zwei N-HydroxymethylGruppen umfasst.

13. Verfahren nach einem der vorhergehenden Ansprüche, wobei das Bindemittel ein polymere Bindemittel ist, das eine Glasübergangstemperatur im Bereich von -20 bis .+60 °C aufweist.

14. Verfahren nach einem der vorhergehenden Ansprüche, wobei die Konzentration an Bindemittel in der zweiten Flotte im Bereich von 10 bis 300 g/l beträgt.

15. Textiles Flächengebilde, erhältlich durch ein Verfahren nach einem der vorhergehenden Ansprüche.
